# EUROPEAN PATENT APPLICATION

(11) **EP 4 178 143 A1**
(43) Date of publication of application: **10.05.2023**
(21) Application number: 21834460.4
(22) Date of filing: 30.06.2021
(51) Int. Cl.: H04L 5/00, H04W 72/08

(54) **METHOD AND APPARATUS FOR DETERMINING SIDELINK ASSISTANCE INFORMATION, AND ELECTRONIC DEVICE**

(30) Priority: 02.07.2020 CN 202010634152
(71) Applicant: Vivo Mobile Communication Co., Ltd., Dongguan, Guangdong 523863 (CN)
(72) Inventor: WANG, Huan, Dongguan, Guangdong 523863 (CN); JI, Zichao, Dongguan, Guangdong 523863 (CN); LIU, Shixiao, Dongguan, Guangdong 523863 (CN)
(74) Representative: Raffay & Fleck
(86) International application number: PCT/CN2021/103519
(87) International publication number: WO 2022/002125

(57) **Abstract**

The present application belongs to the technical field of communications, and discloses a method and apparatus for determining sidelink assistance information, and an electronic device. The method for determining sidelink assistance information is applied to a first terminal and comprises: determining sidelink assistance information according to at least one of the following pieces of information, and sending the sidelink assistance information to a second terminal: traffic transmission information of the second terminal, resource notification information of the second terminal; a protocol specification or control node configuration or pre-configuration or a constraint condition indicated by the second terminal; and the interference strength of a resource.

## Description

### CROSS-REFERENCE TO RELATED APPLICATIONS

This application claims priority to Chinese Patent Application No. 202010634152.2 filed in China on July 2, 2020, which is incorporated herein by reference in its entirety.

### TECHNICAL FIELD

This application relates to the technical field of communications technologies, and in particular, to a method and an apparatus for determining sidelink assistance information, and an electronic device.

### BACKGROUND

Due to hardware constraints and scene limitation, reliability of sidelink transmission is low. To improve the reliability of the sidelink transmission, a first terminal may suggest some assistance information to a second terminal, to assist the second terminal in resource selection and/or adjustment of a transmission parameter of the second terminal.

However, how the first terminal determines the assistance information is not disclosed in the related art.

### SUMMARY

Embodiments of this application provide a method and an apparatus for determining sidelink assistance information, and an electronic device, which can improve reliability of sidelink transmission.

According to a first aspect, an embodiment of this application provides a method for determining sidelink assistance information, where the method is applied to a first terminal and includes:
determining the sidelink assistance information according to at least one piece of the following information, and sending the sidelink assistance information to a second terminal:
service transmission information of the second terminal;
resource notification information of the second terminal;
a constraint condition stipulated in a protocol, configured or pre-configured by a control node, or indicated by a second terminal; or
interference intensity of a resource.

According to a second aspect, an embodiment of this application provides a method for determining sidelink assistance information, where the method is applied to a second terminal and includes:
sending resource notification information and/or a constraint condition to a first terminal, so that the first terminal determines the sidelink assistance information.

According to a third aspect, an embodiment of this application provides an apparatus for determining sidelink assistance information, where the apparatus is applied to a first terminal and includes:
a determining module, configured to determine the sidelink assistance information according to at least one piece of the following information:
service transmission information of a second terminal;
resource notification information of a second terminal;
a constraint condition stipulated in a protocol, configured or pre-configured by a control node, or indicated by a second terminal; or
interference intensity of a resource; and
a first sending module, configured to send the sidelink assistance information to the second terminal.

According to a fourth aspect, an embodiment of this application provides an apparatus for determining sidelink assistance information, where the apparatus is applied to a second terminal and includes:
a second sending module, configured to send resource notification information and/or a constraint condition to a first terminal, so that the first terminal determines the sidelink assistance information.

According to a fifth aspect, an embodiment of this application further provides an electronic device, including a processor, a memory, and a program or an instruction stored in the memory and capable of running on the processor, where when the program or the instruction is executed by the processor, steps of the above method are implemented.

According to a sixth aspect, an embodiment of this application provides a readable storage medium, where the readable storage medium stores a program or an instruction, and the program or the instruction is executed by a processor to implement the steps of the above method.

According to seventh aspect, an embodiment of this application provides a chip, where the chip includes a processor and a communications interface, the communications interface is coupled to the processor, and the processor is configured to run a program or an instruction, to implement the method according to the first aspect.

In this embodiment of this application, the first terminal can determine the sidelink assistance information according to at least one of the service transmission information of a second terminal, the resource notification information of a second terminal, the constraint condition stipulated in a protocol, configured or pre-configured by a control node, or indicated by a second terminal, or the interference intensity of a resource, and send the sidelink assistance information to the second terminal, so that effectiveness and reliability of transmission as well as fairness between terminals can be improved.

### BRIEF DESCRIPTION OF DRAWINGS

To describe the technical solutions in the embodiments of this application more clearly, the following briefly describes the accompanying drawings required in the embodiments of this application. Apparently, the accompanying drawings in the following descriptions show merely some embodiments of this application, and a person of ordinary skill in the art may still derive other drawings from these accompanying drawings without creative efforts.
FIG. 1 is a schematic diagram of a wireless communications system;
FIG. 2 is a schematic diagram in which a LTE-A sends assistance information to a UE-B;
FIG. 3 is a schematic flowchart of a method for determining sidelink assistance information by a first terminal side according to an embodiment of this application;
FIG. 4 is a schematic flowchart of a method for determining sidelink assistance information by a second terminal side according to an embodiment of this application;
FIG. 5 is a schematic structural diagram of an apparatus for determining sidelink assistance information by a first terminal side according to an embodiment of this application;
FIG. 6 is a schematic structural diagram of an apparatus for determining sidelink assistance information by a second terminal side according to an embodiment of this application; and
FIG. 7 is a block diagram of a terminal according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that data used in this way may be interchangeable in appropriate cases, so that the embodiments of this application can be implemented in a sequence other than those shown or described herein. In addition, "and/or" in the specification and claims represents at least one of connected objects. Symbol "/" in this specification generally represents an "or" relationship between associated objects.

The technology described in this specification is not limited to a long term evolution (Long Term Evolution, LTE)/LTE-advanced (LTE-Advanced, LTE-A) system, and may also be used in various wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often interchangeably used. The CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. A TDMA system may implement radio technologies such as a global system for mobile communication (Global System for Mobile Communication, GSM) and the like. The OFDMA system can implement radio technologies such as Ultra Mobile Broadband (Ultra Mobile Broadband, UMB), evolved-UTRA (Evolved-UTRA, E-UTRA), IEEE 802.11 (Wi-Fi), IEEE 802.16 (WiMAX), IEEE 802.20, and Flash-OFDM. UTRA and E-UTRA are parts of the Universal Mobile Telecommunications System (Universal Mobile Telecommunications System, UMTS). LTE and more advanced LTE (for example, LTE-A) are new UMTS versions using E-UTRA. UTRA, E-UTRA, UMTS, LTE, LTE-A and GSM are described in documents from an organization named "3rd generation partnership project (3rd Generation Partnership Project, 3GPP)". CDMA2000 and UMB are described in a document from an origination named "3rd Generation Partnership Project 2" (3GPP2). The technologies described in this specification may be used in the systems and radio technologies mentioned above, and may also be used in another system and radio technology. However, an NR system is described in the following description for illustrative purposes, and an NR terminology is used in most of the following description, although these technologies can also be applied to applications other than the NR system application.

The following description provides examples without limiting the scope, applicability, or configuration set forth in the claims. The functions and arrangements of the elements under discussion may be changed without departing from the spirit and scope of the present disclosure. In the examples, various procedures or components may be appropriately omitted, replaced, or added. For example, the described method may be performed in an order different from that described, and steps may be added, omitted, or combined. In addition, features described with reference to some examples may be combined in other examples.

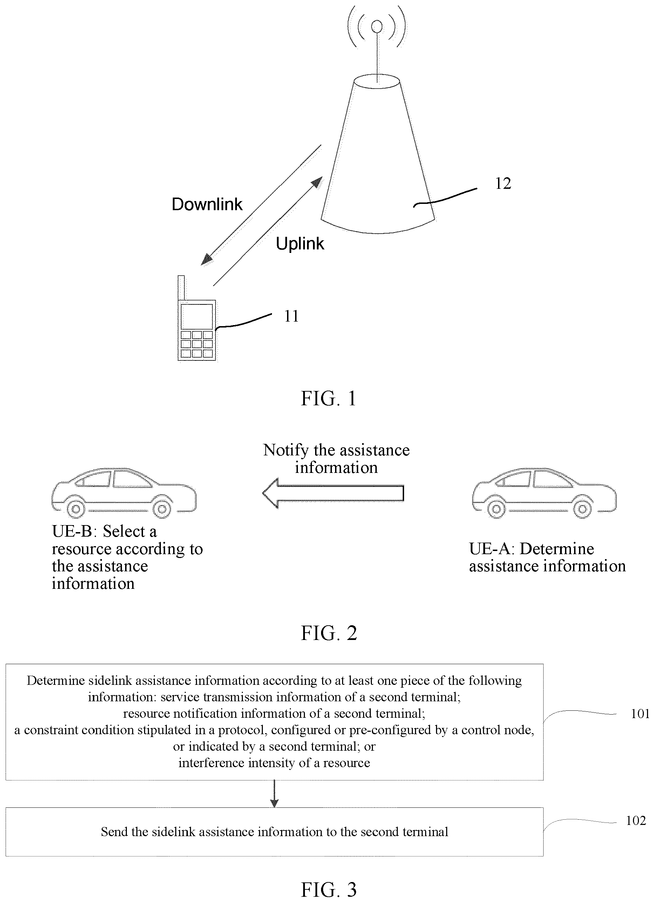

Referring to FIG. 1, FIG. 1 is a block diagram of a wireless communications system to which embodiments of this application can be applied. The wireless communications system includes a terminal 11 and a network-side device 12. The terminal 11 may also be referred to as a terminal device or a user equipment (User Equipment, UE). The terminal 11 may be a terminal side device such as a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It should be noted that a specific type of the terminal 11 is not limited in the embodiments of this application. The network side device 12 may be a base station or a core network. The base station may be a base station of 5G or a later version (for example, gNB or 5GNRNB), or a base station in another communications system (for example, an eNB, a WLAN access point, or another access point), or a location server (for example, an E-SMLC or an LMF (Location Manager Function)). The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, or another appropriate term in the art. As long as a same technical effect is achieved, the base station is not limited to a specified technical term. It should be noted that, in the embodiments of this application, only a base station in an NR system is used as an example, but a specific type of the base station and a specific communications system are not limited in the embodiments of this application.

There are two resource allocation modes in the new radio (new radio, NR) sidelink (sidelink, SL), one is a resource allocation mode based on base station scheduling (mode 1), and the other is a resource allocation mode based on autonomous resource selection of a user equipment (User Equipment, UE) (mode 2). With regard to the resource allocation mode based on base station scheduling, a sidelink resource used by the LTE for data transmission is determined by the base station, and a transmit (TX) LTE is notified by downlink signaling. With regard to the resource allocation mode based on autonomous resource selection of a UE, the LTE selects an available transmission resource from the a (pre-) configured resource pool, and before resource selection, the UE performs channel monitoring, selects a resource set with less interference according to a result of the channel monitoring, and then randomly selects a resource for transmission from the resource set.

A specific working manner in mode 2 is as follows. 1) After the resource selection is triggered, the TX UE first determines a resource selection window, a lower boundary of the resource selection window is at a T1 time after the resource selection is triggered, and an upper boundary of the resource selection window is at a T2 time after the resource selection is triggered, where T2 is a value selected by the UE in a packet delay budget (packet delay budget, PDB) transmitted in a transport block (Transport Block, TB) of the UE, and T2 is not earlier than T1. 2) Before resource selection, the UE needs to determine a candidate resource set (candidate resource set) for resource selection, and compare a reference signal received power (Reference Signal Received Power, RSRP) measured on a resource in the resource selection window with a corresponding RSRP threshold (threshold), and if the RSRP is greater than the RSRP threshold, the resource will be excluded and cannot be included in the candidate resource set. After resource exclusion, remaining resources in the resource selection window form the candidate resource set. Resources in the candidate resource set account for at least 20% of resources in the resource selection window. If the resources in the candidate resource set account for less than 20% of the resources in the resource selection window, the RSRP threshold needs to be increased according to a step-by-step value (3dB), and then the resource exclusion is performed until no less than 20% of the resources can be selected. 3) After the candidate resource set is determined, the UE randomly selects a transmission resource in the candidate resource set. In addition, the LTE can reserve a transmission resource for a next transmission in this transmission.

In the related art, as shown in FIG. 2, a UE-A (that is, a first terminal) determines a resource set, and the UE-A notifies a UE-B (that is, a second terminal) of the resource set, and the UE-B may consider, when making a resource selection in mode 2, the resource set notified by the LTE-A. The resource set is a type of assistance information.

The following scenarios exist in sidelink (sidelink) transmission:
Scenario 1: Due to the limitation on half-duplex, a first terminal (RX LTE) cannot perform transmission and receiving simultaneously, and a transmission resource selected by a second terminal (TX UE) may affect reliability of transmission between the RX UE and the TX UE.
Scenario 2: Due to a defect in resource selection in mode 2, resource selection by different TX UEs may conflict each other, and the assistance information can also partially resolve a conflict problem. The defect is caused by at least inaccuracy of resource monitoring (for example, results of channel monitoring by the TX UE and RX UE are inconsistent) and randomness of resource selection during resource selection in mode 2.
Scenario 3: When the RX UE receives transmissions of multiple physical sidelink shared channels (Physical Sidelink Shared Channel, PSSCH) from the TX UE and feeds back physical sidelink feedback channels (Physical Sidelink Feedback channel, PSFCH) for the transmission of multiple PSSCHs, if the PSFCHs corresponding to the transmission of the PSSCHs fall in a same PSFCH occasion, due to limitation on UE capability and/or power control, many PSFCHs cannot be sent simultaneously, so that transmission reliability cannot be ensured.

The assistance information can assist in avoiding this problem, but the prior art does not disclose how to determine sidelink assistance information.

An embodiment of this application provides a method for determining sidelink assistance information, applied to a first terminal. As shown in FIG. 3, the method includes:
Step 101: Determine sidelink assistance information according to at least one piece of the following information:
   service transmission information of a second terminal;
   resource notification information of a second terminal;
   a constraint condition stipulated in a protocol, configured or pre-configured by a control node, or indicated by a second terminal; or
   interference intensity of a resource; and
Step 102: Send the sidelink assistance information to the second terminal.

In this embodiment of this application, the first terminal can determine the sidelink assistance information according to at least one of the service transmission information of a second terminal, the resource notification information of a second terminal, the constraint condition stipulated in a protocol, configured or pre-configured by a control node, or indicated by a second terminal, or the interference intensity of a resource, and send the sidelink assistance information to the second terminal, so that effectiveness and reliability of transmission as well as fairness between terminals can be improved.

In some embodiments, the first terminal (RX UE) may determine the sidelink assistance information according to the service transmission information of the second terminal (TX UE), the service transmission information may be exchanged between the first terminal and the second terminal, or the second terminal may notify the first terminal of the service transmission information. A type of the service transmission information may be determined by the second terminal, configured or pre-configured by the control node, or stipulated in a protocol. The type of the service transmission information includes service packet related information (such as a PDB, a data rate (data rate), a service packet cycle, quality of service (QoS), a service packet priority, and the like). For example, the type of the service transmission information includes transmission parameter related information (such as a TBS range (TBS range), a modulation and coding scheme range (MCS range), and a transmit power range (Tx power range)).

In some embodiments, the service transmission information is for at least one of the following objects: a LTE group (per LTE group), a LTE pair (UE pair), a session (per session), a bear (per bear), or a RRC connection (per RRC connection).

In some embodiments, signaling carrying the service transmission information includes at least one of the following:
radio resource control RRC signaling (PC5-RRC);
a medium access control control element MAC CE;
sidelink control information SCI; or
sidelink feedback control information SFCI.

The first terminal may autonomously determine the sidelink assistance information according to the service transmission information of the second terminal, namely UE implementation; and the first terminal may also determine the sidelink assistance information when receiving specific service transmission information of the second terminal, and a service packet attribute of the specific service transmission information is configured or pre-configured by the control node or stipulated in a protocol. For example, only when some push information of the second terminal is received, the first terminal determines and sends the sidelink assistance information. That is, the first terminal determines and sends the sidelink assistance information only in the case of some service packet attributes (such as a QoS attribute), the TBS range, the MCS range, and the Tx power range stipulated in a protocol or configured or pre-configured by the control node.

The first terminal may also receive trigger signaling from the second terminal, and the trigger signaling indicates that the first terminal feeds back the sidelink assistance information. If the second terminal triggers, through the trigger signaling, the first terminal to feed back the sidelink assistance information, the second terminal may notify the first terminal of the service packet information simultaneously or after or before the trigger signaling is sent. For example, the 'trigger signaling' and 'service packet information' are same signaling, or the trigger signaling indicates a resource transmitted in the service packet information, or the trigger signaling and transmission of the service packet information are independent of each other or have a binding relationship.

In some embodiments, the first terminal may determine the sidelink assistance information according to the resource notification information of the second terminal, and the second terminal may select multiple candidate resources and notify the first terminal of selected multiple candidate resources, and the first terminal feeds back at least one proper recommended resource (that is, the sidelink assistance information) to the second terminal.

The resource notification information may include information of M resources, and the information of M resources includes at least one of the following: a time domain position of the resources, a frequency domain position of the resources, a period of the resources, a number of the resources, or whether the resources are used to enable retransmission mode or blind retransmission based on hybrid automatic repeat request HARQ feedback, where M is an integer greater than 1.

The sidelink assistance information fed back by the first terminal to the second terminal may include at least one of the following:
N resources selected by the first terminal from the M resources, where N is a positive integer;
K (K>=N) resources selected by the first terminal from a resource pool, where an intersection set of the K resources and the M resources is N resources, and if the intersection set of the K resources and the M resources is an empty set, the N resources selected from the resource pool are fed back;
N resources selected by the first terminal from a resource pool; or
N resources with the least interference intensity among the M resources, such as resources with the greatest or smallest measurement result of a RSRP, RSSI (received signal strength indicator), RSRQ (reference signal received quality), SINR (signal to interference plus noise ratio), or SNR (signal to noise ratio).

M and/or N may be determined by the first terminal, controlled or pre-configured by the control node, or stipulated in a protocol.

The first terminal may also receive trigger signaling from the second terminal, and the trigger signaling indicates that the first terminal feeds back the sidelink assistance information. If the second terminal triggers the first terminal to feed back the sidelink assistance information through the trigger signaling, the second terminal may notify the first terminal of the resource notification information simultaneously or after or before the trigger signaling is sent. For example, the 'trigger signaling' and 'resource notification information' are same signaling, or the trigger signaling indicates a resource transmitted in the resource information, or the trigger signaling and transmission of the resource notification information are independent of each other or have a binding relationship.

In some embodiments, the first terminal may determine the sidelink assistance information according to the constraint condition stipulated in a protocol, configured or pre-configured by the control node, or indicated by the second terminal. The constraint condition stipulated in a protocol, or configured or pre-configured by the control node are for at least one of the following objects: a resource pool (per pool), a bandwidth part BWP (per BWP), or a LTE (per UE). If the second terminal indicates the constraint condition for the first terminal, the first terminal may autonomously determine the sidelink assistance information according to the constraint condition.

In some embodiments, the constraint condition may include at least one of the following:
a resource in the sidelink assistance information is a resource in a specific resource pool, that is, the first terminal can recommend only the resource in the specific resource pool;
limitation on a size (size) of a resource set; or
limitation on a pattern (pattern) of a resource set.

In some embodiments, the limitation on the size or pattern of the resource set includes at least one of the following:
a maximum value of the number of time domain resources, such as the number of (sub-)slots;
a minimum value of the number of time domain resources;
a maximum value of a ratio of a feedback time domain resource to all time domain resources in a specific time domain window;
a minimum value of a ratio of a feedback time domain resource to all time domain resources in a specific time domain window;
a maximum value of an interval between time domain resources;
a minimum value of an interval between time domain resources;
a maximum value of a length of continuous sidelink time domain resources;
a minimum value of a length of continuous sidelink time domain resources;
a maximum value of the number of frequency domain resources (such as a sub-channel (sub-channel) or PRB (physical resource block));
a minimum value of the number of frequency domain resources;
a maximum value of a ratio of the number of frequency domain resources to a resource pool bandwidth and/or a bandwidth part BWP; or
a minimum value of a ratio of the number of frequency domain resources to a resource pool bandwidth and/or a bandwidth part BWP.

The above limitation is mainly for an aperiodic resource set, but not limited to the aperiodic resource set. For a periodic resource, the limitation on the size and/or pattern of a resource set may also include:
a maximum value of a periodic resource period; or
a minimum value of a periodic resource period.

The constraint condition may have a binding relationship with transmitted service information. For example, the limitation on the size and/or pattern of the resource set is related to a priority and/or QoS attribute of a service (such as a delay in a transmission packet, transmission reliability, a data rate, a transmission range, and the like), and one or more service priorities correspond to one independent limitation.

In some embodiments, the first terminal may determine the sidelink assistance information according to the interference intensity of a resource, and the determining the sidelink assistance information according to the interference intensity of a resource includes any one of the following:
the first terminal determines a reference resource window and measures a resource in the reference resource window, and the sidelink assistance information indicates z% of resources with a lowest measurement result;
the first terminal determines a reference resource window and measures a resource in the reference resource window, and the sidelink assistance information indicates k% of resources with a highest measurement result;
the first terminal determines a reference resource window and measures a resource in the reference resource window, and a resource indicated by the sidelink assistance information includes z% of resources with a lowest measurement result; the first terminal determines a reference resource window and measures a resource in the reference resource window, and a resource indicated by the sidelink assistance information includes k% of resources with a highest measurement result;
the first terminal determines a reference resource window and measures a resource in the reference resource window, and a resource indicated by the sidelink assistance information does not include z% of resources with a lowest measurement result;
the first terminal determines a reference resource window and measures a resource in the reference resource window, and a resource indicated by the sidelink assistance information does not include k% of resources with a highest measurement result;
the first terminal determines a reference resource window and measures a resource in the reference resource window, and the sidelink assistance information indicates a resource with a measurement result lower than a preset threshold;
the first terminal determines a reference resource window and measures a resource in the reference resource window, and the sidelink assistance information indicates a resource with a measurement result higher than a preset threshold;
the first terminal determines a reference resource window and measures a resource in the reference resource window, and a resource indicated by the sidelink assistance information includes a resource with a measurement result lower than a preset threshold;
the first terminal determines a reference resource window and measures a resource in the reference resource window, and a resource indicated by the sidelink assistance information includes a resource with a measurement result higher than a preset threshold;
the first terminal determines a reference resource window and measures a resource in the reference resource window, and a resource indicated by the sidelink assistance information does not include a resource with a measurement result lower than a preset threshold;
the first terminal determines a reference resource window and measures a resource in the reference resource window, and a resource indicated by the sidelink assistance information does not include a resource with a measurement result higher than a preset threshold;
the first terminal selects a virtual resource and determines a candidate resource set, and the sidelink assistance information indicates a resource in the candidate resource set;
the first terminal selects a virtual resource and determines a candidate resource set, and a resource indicated by the sidelink assistance information includes a resource in the candidate resource set; or
the first terminal selects a virtual resource and determines a candidate resource set, and a resource indicated by the sidelink assistance information does not include a resource in the candidate resource set.

The measurement result includes measurement structures such as a RSRP, RSSI (received signal strength indicator), RSRQ (reference signal received quality), SINR (signal to interference plus noise ratio), or SNR (signal to noise ratio).

The reference resource window (including a start position and a length) is determined by the first terminal, configured or pre-configured by the control node, or stipulated in a protocol, and if the reference resource window is stipulated in a protocol, the reference resource window may be a fixed value stipulated in a protocol, or a rule for determining the reference resource window is stipulated in a protocol; and/or
a granularity of a resource in the reference resource window is determined by the first terminal, configured or pre-configured by the control node, or stipulated in a protocol; and/or
the z% and k% are determined by the first terminal, configured or pre-configured by the control node, or stipulated in a protocol, and z and k may be a same value or different values; and/or
the preset threshold is determined by the first terminal, configured or pre-configured by the control node, or stipulated in a protocol.

In addition, if the first terminal autonomously determines the above information, the first terminal may feed back the autonomously determined information.

If the first terminal selects a virtual resource and determines a candidate resource set, a granularity of a candidate resource in the candidate resource set is notified by the second terminal, determined by the first terminal, configured or pre-configured by the control node, or stipulated in a protocol; and/or assumption (such as assumption for a priority (priority) and/or packet delay budget (PDB)) of a transport block for transmitting the candidate resource is notified by the second terminal, determined by the first terminal, configured or pre-configured by the control node, or stipulated in a protocol; and/or a resource selection window for selection of the virtual resource is determined by the first terminal, configured or pre-configured by the control node, or stipulated in a protocol; and/or the candidate resource in the candidate resource set accounts for y% of candidate resources in the resource selection window, and y% is determined by the first terminal, configured or pre-configured by the control node, or stipulated in a protocol.

If the resource selection window for selection of the virtual resource is determined by the first terminal, configured or pre-configured by the control node, or stipulated in a protocol, for example, it is stipulated in a protocol that the resource selection window regards a time for triggering the first terminal to feed back the sidelink assistance information as a reference time point, and a start point for the resource selection window is after x time units of a reference time point or within y time units of the reference time point; or a trigger point for selection of the virtual resource is after x time units of the reference time point or within y time units of the reference time point, and the first terminal selects a virtual resource according to TB assumption, and further determines a position of the resource selection window.

In some embodiments, the sidelink assistance information further includes at least one of the following:
a maximum measurement value measured on a reported resource;
a minimum measurement value measured on a reported resource;
a measurement value of each resource in a reported resource; or
a threshold of a measurement value, where the threshold of a measurement value may be used to obtain the candidate resource set, where
the measurement value includes at least one the following: a reference signal received power RSRP, a received signal strength indicator RSSI, reference signal received quality RSRQ, a signal to interference plus noise ratio SINR, or a signal to noise ratio SNR.

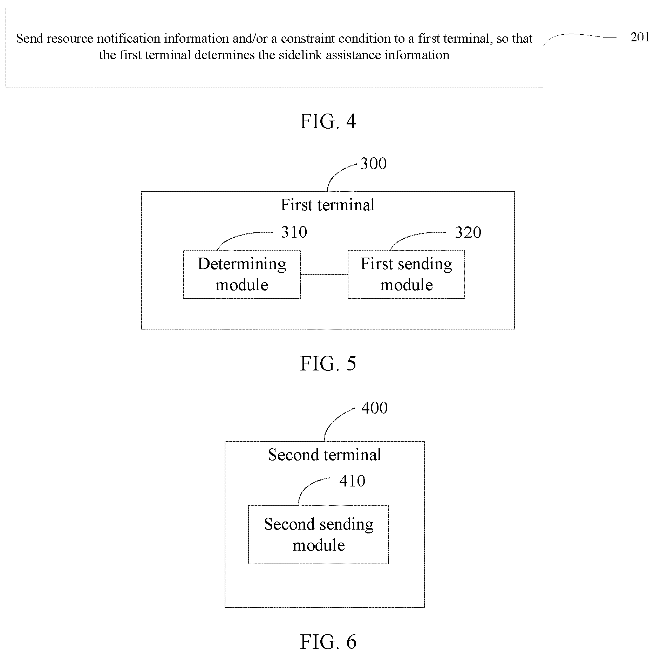

An embodiment of this application provides a method for determining sidelink assistance information, applied to a second terminal. As shown in FIG. 4, the method includes:
Step 201: Send resource notification information and/or a constraint condition to a first terminal, so that the first terminal determines sidelink assistance information.

In some embodiments, the first terminal may determine the sidelink assistance information according to the resource notification information of the second terminal, and the second terminal may select multiple candidate resources and notify the first terminal of selected multiple candidate resources, and the first terminal feeds back at least one proper recommended resource (that is, the sidelink assistance information) to the second terminal.

The resource notification information may include information of M resources, and the information of M resources includes at least one of the following: a time domain position of the resources, a frequency domain position of the resources, a period of the resources, a number of the resources, or whether the resources are used to enable retransmission mode or blind retransmission based on hybrid automatic repeat request HARQ feedback, where M is an integer greater than 1.

In some embodiments, the first terminal may determine the sidelink assistance information according to a constraint condition indicated by the second terminal, and the constraint condition is for at least one of the following objects: a resource pool, a bandwidth part BWP, or a terminal.

In some embodiments, the constraint condition may include at least one of the following:
a resource in the sidelink assistance information is a resource in a specific resource pool, that is, the first terminal can recommend only the resource in the specific resource pool;
limitation on a size (size) of a resource set;
or limitation on a pattern (pattern) of a resource set.

In some embodiments, the limitation on the size or pattern of the resource set includes at least one of the following:
a maximum value of the number of time domain resources, such as the number of (sub-)slots;
a minimum value of the number of time domain resources;
a maximum value of a ratio of a feedback time domain resource to all time domain resources in a specific time domain window;
a minimum value of a ratio of a feedback time domain resource to all time domain resources in a specific time domain window;
a maximum value of an interval between time domain resources;
a minimum value of an interval between time domain resources;
a maximum value of a length of continuous sidelink time domain resources;
a minimum value of a length of continuous sidelink time domain resources;
a maximum value of the number of frequency domain resources (such as a sub-channel (sub-channel) or PRB (physical resource block));
a minimum value of the number of frequency domain resources;
a maximum value of a ratio of the number of frequency domain resources to a resource pool bandwidth and/or a bandwidth part BWP; or
a minimum value of a ratio of the number of frequency domain resources to a resource pool bandwidth and/or a bandwidth part BWP.

The above limitation is mainly for an aperiodic resource set, but not limited to the aperiodic resource set. For a periodic resource, the limitation on the size and/or pattern of a resource set may also include:
a maximum value of a periodic resource period; or
a minimum value of a periodic resource period.

The constraint condition may have a binding relationship with transmitted service information. For example, the limitation on the size and/or pattern of the resource set is related to a priority and/or QoS attribute of a service (such as a delay of a transmission packet, transmission reliability, a data rate, a transmission range, and the like), and one or more service priorities correspond to one independent limitation.

After the second terminal receives the sidelink assistance information sent by the first terminal, the second terminal may select a resource according to the sidelink assistance information and the constraint condition for resource selection. The constraint condition for resource selection is stipulated in a protocol, configured or pre-configured by a control node, or sent by the first terminal.

The constraint condition for resource selection may have a binding relationship with transmitted service information (such as QoS information). For example, the constraint condition is related to a priority and/or QoS attribute of a service (such as a delay of a transmission packet, transmission reliability, a data rate, a transmission range, and the like), and one or more service priorities correspond to one independent limitation.

In some embodiments, the constraint condition for resource selection may include at least one of the following:
times for which the second terminal selects a resource according to the sidelink assistance information;
the number of a resource selected by the second terminal according to the sidelink assistance information;
a data volume of a resource selected by the second terminal according to the sidelink assistance information;
a transport block for a resource, selected by the second terminal according to the sidelink assistance information;
a modulation and coding scheme for a resource, selected by the second terminal according to the sidelink assistance information; or
a transmission power for a resource, selected by the second terminal according to the sidelink assistance information.

It should be noted that an executing body for the method for determining the sidelink assistance information provided in this embodiment of this application may be an apparatus for determining the sidelink assistance information, or a module that is in the apparatus for determining the sidelink assistance information and that is configured to load the method for determining the sidelink assistance information. In this embodiment of this application, for example, the method for determining the sidelink assistance information provided in this embodiment of this application is described by taking the apparatus for determining the sidelink assistance information loading the method for determining the sidelink assistance information as an example

The apparatus for determining the sidelink assistance information in this embodiment of this application is applied to a first terminal 300, and as shown in FIG. 5, the apparatus includes:
a determining module 310, configured to determine sidelink assistance information according to at least one piece of the following information:
service transmission information of a second terminal;
resource notification information of a second terminal;
a constraint condition stipulated in a protocol, configured or pre-configured by a control node, or indicated by a second terminal; or
interference intensity of a resource; and
a first sending module 320, configured to send the sidelink assistance information to the second terminal.

In this embodiment of this application, the first terminal can determine the sidelink assistance information according to at least one of the service transmission information of a second terminal, the resource notification information of a second terminal, the constraint condition stipulated in a protocol, configured or pre-configured by a control node, or indicated by a second terminal, or the interference intensity of a resource, and send the sidelink assistance information to the second terminal, so that effectiveness and reliability of transmission as well as fairness between terminals can be improved.

In some embodiments, the determining module 310 may determine the sidelink assistance information according to the service transmission information of the second terminal (TX UE), specifically, the service transmission information may be exchanged between the first terminal and the second terminal, or the second terminal may notify the first terminal of the service transmission information. A type of the service transmission information may be determined by the second terminal, configured or pre-configured by the control node, or stipulated in a protocol. The type of the service transmission information includes service packet related information (such as a PDB, a data rate, a service packet cycle, service packet QoS, a service packet priority, and the like). For example, the type of the service transmission information includes transmission parameter related information (such as a TBS range, a MCS range, and a Tx power range).

In some embodiments, the service transmission information is for at least one of the following objects: a LTE group (per LTE group), a LTE pair (UE pair), a session (per session), a bear (per bear), or a RRC connection (per RRC connection).

In some embodiments, signaling carrying the service transmission information includes at least one of the following:
radio resource control RRC signaling (PC5-RRC);
a medium access control control element MAC CE;
sidelink control information SCI; or
sidelink feedback control information SFCI.

The determining module 310 may autonomously determine the sidelink assistance information according to the service transmission information of the second terminal, namely, UE implementation. The determining module 310 may also determine the sidelink assistance information when receiving specific service transmission information of the second terminal, and a service packet attribute of the specific service transmission information is configured or pre-configured by the control node or stipulated in a protocol. For example, only when some push information of the second terminal is received, the first terminal determines and sends the sidelink assistance information. That is, the first terminal determines and sends the sidelink assistance information only in the case of some service packet attributes (such as a QoS attribute), the TBS range, the MCS range, and the Tx power range stipulated in a protocol or configured or pre-configured by the control node.

The first terminal may also receive trigger signaling from the second terminal, and the trigger signaling indicates that the first terminal feeds back the sidelink assistance information. If the second terminal triggers, through the trigger signaling, the first terminal to feed back the sidelink assistance information, the second terminal may notify the first terminal of the service packet information simultaneously or after or before the trigger signaling is sent. For example, the 'trigger signaling' and 'service packet information' are same signaling, or the trigger signaling indicates a resource transmitted in the service packet information, or the trigger signaling and transmission of the service packet information are independent of each other or have a binding relationship.

In some embodiments, the determining module 310 may determine the sidelink assistance information according to the resource notification information of the second terminal, and the second terminal may select multiple candidate resources and notify the first terminal of selected multiple candidate resources, and the first terminal feeds back at least one proper recommended resource (that is, the sidelink assistance information) to the second terminal.

The resource notification information may include information of M resources, and the information of M resources includes at least one of the following: a time domain position of the resources, a frequency domain position of the resources, a period of the resources, a number of the resources, or whether the resources are used to enable retransmission mode or blind retransmission based on hybrid automatic repeat request HARQ feedback, where M is an integer greater than 1.

The sidelink assistance information fed back by the first sending module 320 to the second terminal may include at least one of the following:
N resources selected by the first terminal from the M resources, where N is a positive integer;
K (K>=N) resources selected by the first terminal from a resource pool, where an intersection set of the K resources and the M resources is N resources, and if the intersection set of the K resources and the M resources is an empty set, the N resources selected from the resource pool are fed back;
N resources selected by the first terminal from a resource pool; or
N resources with the least interference intensity among the M resources, such as resources with the greatest or smallest measurement result of a RSRP, RSSI (received signal strength indicator), RSRQ (reference signal received quality), SINR (signal to interference plus noise ratio), or SNR (signal to noise ratio).

M and/or N may be determined by the first terminal, controlled or pre-configured by the control node, or stipulated in a protocol.

The first terminal may also receive trigger signaling from the second terminal, and the trigger signaling indicates that the first terminal feeds back the sidelink assistance information. If the second terminal triggers the first terminal to feed back the sidelink assistance information through the trigger signaling, the second terminal may notify the first terminal of the resource notification information simultaneously or after or before the trigger signaling is sent. For example, the 'trigger signaling' and 'resource notification information' are same signaling, or the trigger signaling indicates a resource transmitted in the resource information, or the trigger signaling and transmission of the resource notification information are independent of each other or have a binding relationship.

In some embodiments, the determining module 310 may determine the sidelink assistance information according to the constraint condition stipulated in a protocol, configured or pre-configured by the control node, or indicated by the second terminal. The constraint condition stipulated in a protocol, or configured or pre-configured by the control node are for at least one of the following objects: a resource pool (per pool), a bandwidth part BWP (per BWP), or a UE (per UE). If the second terminal indicates the constraint condition for the first terminal, the first terminal may autonomously determine the sidelink assistance information according to the constraint condition.

In some embodiments, the constraint condition may include at least one of the following:
a resource in the sidelink assistance information is a resource in a specific resource pool, that is, the first terminal can recommend only the resource in the specific resource pool;
limitation on a size (size) of a resource set; or
limitation on a pattern (pattern) of a resource set.

In some embodiments, the limitation on the size or pattern of the resource set includes at least one of the following:
a maximum value of the number of time domain resources, such as the number of (sub-)slots;
a minimum value of the number of time domain resources;
a maximum value of a ratio of a feedback time domain resource to all time domain resources in a specific time domain window;
a minimum value of a ratio of a feedback time domain resource to all time domain resources in a specific time domain window;
a maximum value of an interval between time domain resources;
a minimum value of an interval between time domain resources;
a maximum value of a length of continuous sidelink time domain resources;
a minimum value of a length of continuous sidelink time domain resources;
a maximum value of the number of frequency domain resources (such as a sub-channel (sub-channel) or PRB (physical resource block));
a minimum value of the number of frequency domain resources;
a maximum value of a ratio of the number of frequency domain resources to a resource pool bandwidth and/or a bandwidth part BWP; or
a minimum value of a ratio of the number of frequency domain resources to a resource pool bandwidth and/or a bandwidth part BWP.

The above limitation is mainly for an aperiodic resource set, but not limited to the aperiodic resource set. For a periodic resource, the limitation on the size and/or pattern of a resource set may also include:
a maximum value of a periodic resource period; or
a minimum value of a periodic resource period.

The constraint condition may have a binding relationship with transmitted service information. For example, the limitation on the size and/or pattern of the resource set is related to a priority and/or QoS attribute of a service (such as a delay of a transmission packet, transmission reliability, a data rate, a transmission range, and the like), and one or more service priorities correspond to one independent limitation.

In some embodiments, the determining module 310 may determine the sidelink assistance information according to the interference intensity of a resource, and the determining the sidelink assistance information according to the interference intensity of a resource includes any one of the following:
determining a reference resource window and measuring a resource in the reference resource window, where the sidelink assistance information indicates z% of resources with a lowest measurement result;
determining a reference resource window and measuring a resource in the reference resource window, where the sidelink assistance information indicates k% of resources with a highest measurement result;
determining a reference resource window and measuring a resource in the reference resource window, where a resource indicated by the sidelink assistance information includes z% of resources with a lowest measurement result; the first terminal determines a reference resource window and measures a resource in the reference resource window, and a resource indicated by the sidelink assistance information includes k% of resources with a highest measurement result;
determining a reference resource window and measuring a resource in the reference resource window, where a resource indicated by the sidelink assistance information does not include z% of resources with a lowest measurement result;
determining a reference resource window and measuring a resource in the reference resource window, where a resource indicated by the sidelink assistance information does not include k% of resources with a highest measurement result;
determining a reference resource window and measuring a resource in the reference resource window, where the sidelink assistance information indicates a resource with a measurement result lower than a preset threshold;
determining a reference resource window and measuring a resource in the reference resource window, where the sidelink assistance information indicates a resource with a measurement result higher than a preset threshold;
determining a reference resource window and measuring a resource in the reference resource window, where a resource indicated by the sidelink assistance information includes a resource with a measurement result lower than a preset threshold;
determining a reference resource window and measuring a resource in the reference resource window, where a resource indicated by the sidelink assistance information includes a resource with a measurement result higher than a preset threshold;
determining a reference resource window and measuring a resource in the reference resource window, where a resource indicated by the sidelink assistance information does not include a resource with a measurement result lower than a preset threshold;
determining a reference resource window and measuring a resource in the reference resource window, where a resource indicated by the sidelink assistance information does not include a resource with a measurement result higher than a preset threshold;
selecting a virtual resource and determining a candidate resource set, where the sidelink assistance information indicates a resource in the candidate resource set;
selecting a virtual resource and determining a candidate resource set, where a resource indicated by the sidelink assistance information includes a resource in the candidate resource set; or
selecting a virtual resource and determining a candidate resource set, where a resource indicated by the sidelink assistance information does not include a resource in the candidate resource set.

The measurement result includes measurement structures such as a RSRP, RSSI (received signal strength indicator), RSRQ (reference signal received quality), SINR (signal to interference plus noise ratio), or SNR (signal to noise ratio).

The reference resource window (including a start position and a length) is determined by the first terminal, configured or pre-configured by the control node, or stipulated in a protocol, and if the reference resource window is stipulated in a protocol, the reference resource window may be a fixed value stipulated in a protocol, or a rule for determining the reference resource window is stipulated in a protocol; and/or
a granularity of a resource in the reference resource window is determined by the first terminal, configured or pre-configured by the control node, or stipulated in a protocol; and/or
the z% and k% are determined by the first terminal, configured or pre-configured by the control node, or stipulated in a protocol, and z and k may be a same value or different values; and/or
the preset threshold is determined by the first terminal, configured or pre-configured by the control node, or stipulated in a protocol.

In addition, if the first terminal autonomously determines the above information, the first terminal may feed back the autonomously determined information.

If the first terminal selects a virtual resource and determines a candidate resource set, a granularity of a candidate resource in the candidate resource set is notified by the second terminal, determined by the first terminal, configured or pre-configured by the control node, or stipulated in a protocol; and/or assumption (such as assumption for a priority (priority) and/or packet delay budget (PDB)) of a transport block for transmitting the candidate resource is notified by the second terminal, determined by the first terminal, configured or pre-configured by the control node, or stipulated in a protocol; and/or a resource selection window for selection of the virtual resource is determined by the first terminal, configured or pre-configured by the control node, or stipulated in a protocol; and/or the candidate resource in the candidate resource set accounts for y% of candidate resources in the resource selection window, and y% is determined by the first terminal, configured or pre-configured by the control node, or stipulated in a protocol.

If the resource selection window for selection of the virtual resource is determined by the first terminal, configured or pre-configured by the control node, or stipulated in a protocol, for example, it is stipulated in a protocol that the resource selection window regards a time for triggering the first terminal to feed back the sidelink assistance information as a reference time point, and a start point for the resource selection window is after x time units of a reference time point or within y time units of the reference time point; or a trigger point for selection of the virtual resource is after x time units of the reference time point or within y time units of the reference time point, and the first terminal selects a virtual resource according to TB assumption, and further determines a position of the resource selection window.

In some embodiments, the sidelink assistance information further includes at least one of the following:
a maximum measurement value measured on a reported resource;
a minimum measurement value measured on a reported resource;
a measurement value of each resource in a reported resource; or
a threshold of a measurement value, where the threshold of a measurement value may be used to obtain the candidate resource set, where
the measurement value includes at least one the following: a reference signal received power RSRP, a received signal strength indicator RSSI, reference signal received quality RSRQ, a signal to interference plus noise ratio SINR, or a signal to noise ratio SNR.

The apparatus for determining the sidelink assistance information in this embodiment of this application is applied to a second terminal 400, and as shown in FIG. 6, the apparatus includes:
a second sending module 410, configured to send resource notification information and/or a constraint condition to a first terminal, so that the first terminal determines the sidelink assistance information.

In some embodiments, the first terminal may determine the sidelink assistance information according to the resource notification information of the second terminal, and the second terminal may select multiple candidate resources and notify the first terminal of selected multiple candidate resources, and the first terminal feeds back at least one proper recommended resource (that is, the sidelink assistance information) to the second terminal.

The resource notification information may include information of M resources, and the information of M resources includes at least one of the following: a time domain position of the resources, a frequency domain position of the resources, a period of the resources, a number of the resources, or whether the resources are used to enable retransmission mode or blind retransmission based on hybrid automatic repeat request HARQ feedback, where M is an integer greater than 1.

In some embodiments, the first terminal may determine the sidelink assistance information according to a constraint condition indicated by the second terminal, and the constraint condition is for at least one of the following objects: a resource pool, a bandwidth part BWP, or a terminal.

In some embodiments, the constraint condition may include at least one of the following:
a resource in the sidelink assistance information is a resource in a specific resource pool, that is, the first terminal can recommend only the resource in the specific resource pool;
limitation on a size (size) of a resource set; or
limitation on a pattern (pattern) of a resource set.

In some embodiments, the limitation on a size or pattern of the resource set includes at least one of the following:
a maximum value of the number of time domain resources, such as the number of (sub-)slots;
a minimum value of the number of time domain resources;
a maximum value of a ratio of a feedback time domain resource to all time domain resources in a specific time domain window;
a minimum value of a ratio of a feedback time domain resource to all time domain resources in a specific time domain window;
a maximum value of an interval between time domain resources;
a minimum value of an interval between time domain resources;
a maximum value of a length of continuous sidelink time domain resources;
a minimum value of a length of continuous sidelink time domain resources;
a maximum value of the number of frequency domain resources (such as a sub-channel (sub-channel) or PRB (physical resource block));
a minimum value of the number of frequency domain resources;
a maximum value of a ratio of the number of frequency domain resources to a resource pool bandwidth and/or a bandwidth part BWP; or
a minimum value of a ratio of the number of frequency domain resources to a resource pool bandwidth and/or a bandwidth part BWP.

The above limitation is mainly for an aperiodic resource set, but not limited to the aperiodic resource set. For a periodic resource, the limitation on the size and/or pattern of a resource set may also include:
a maximum value of a periodic resource period;
or a minimum value of a periodic resource period.

The constraint condition may have a binding relationship with transmitted service information. For example, the limitation on the size and/or pattern of the resource set is related to a priority and/or QoS attribute of a service (such as a delay of a transmission packet, transmission reliability, a data rate, a transmission range, and the like), and one or more service priorities correspond to one independent limitation.

In some embodiments, the apparatus further includes:
a receiving module, configured to select, after receiving the sidelink assistance information sent by the first terminal, a resource according to the sidelink assistance information and the constraint condition for resource selection. The constraint condition for resource selection is stipulated in a protocol, configured or pre-configured by a control node, or sent by the first terminal.

The constraint condition for resource selection may have a binding relationship with transmitted service information (such as QoS information). For example, the constraint condition is related to a priority and/or QoS attribute of a service (such as a delay of a transmission packet, transmission reliability, a data rate, a transmission range, and the like), and one or more service priorities correspond to one independent limitation.

In some embodiments, the constraint condition for resource selection may include at least one of the following:
times for which the second terminal selects a resource according to the sidelink assistance information;
the number of a resource selected by the second terminal according to the sidelink assistance information;
a data volume of a resource selected by the second terminal according to the sidelink assistance information;
a transport block (TB) for a resource selected by the second terminal according to the sidelink assistance information;
a modulation and coding scheme (MCS) for a resource selected by the second terminal according to the sidelink assistance information; or
a transmission power (transmission power) for a resource selected by the second terminal according to the sidelink assistance information.

The apparatus for determining sidelink assistance information in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The apparatus for determining sidelink assistance information in this embodiment of this application may be an apparatus with an operating system. The operating system may be an Android (Android) operating system, an iOS operating system, or another possible operating system, which is not specifically limited in the embodiments of this application.

The apparatus for determining sidelink assistance information provided in this embodiment of this application can implement each process of the method for determining sidelink assistance information in the method embodiment of FIG. 3 or FIG. 4. To avoid repetition, details are not described herein again.

Optionally, an embodiment of this application further provides an electronic device, including a processor, a memory, and a program or an instruction stored in the memory and capable of running on the processor. When the program or the instruction is executed by the processor, the processes of the above embodiments of the method for determining sidelink assistance information are implemented, and a same technical effect can be achieved. To avoid repetition, details are not described herein again.

It should be noted that the electronic device in this embodiment of this application includes the mobile electronic device and the non-mobile electronic device described above.

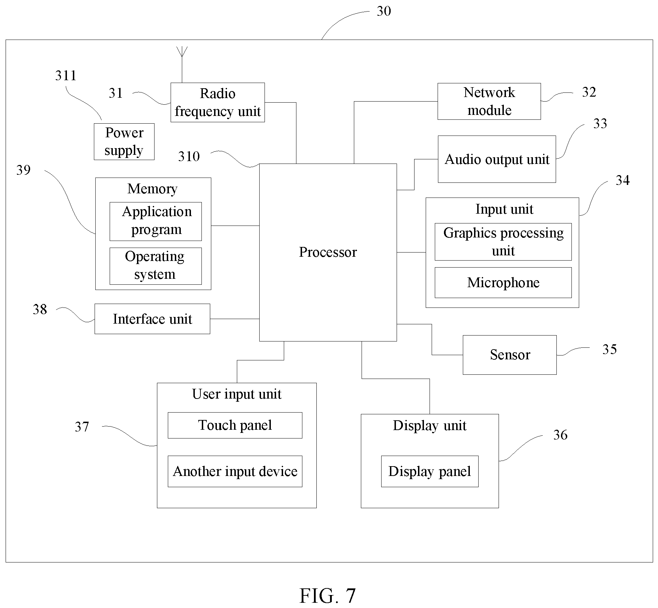

The electronic device in this embodiment may be a terminal. FIG. 7 is a schematic diagram of a hardware structure of a terminal according to the embodiments of this application. A terminal 30 includes but is not limited to components such as a radio frequency unit 31, a network module 32, an audio output unit 33, an input unit 34, a sensor 35, a display unit 36, a user input unit 37, an interface unit 38, a memory 39, a processor 310, and a power supply 311. It can be understood by a person skilled in the art that, the terminal structure shown in FIG. 7 does not constitute any limitation on the terminal, and the terminal may include more or fewer components than those shown in the figure, or combine some components, or have different component arrangements. In this embodiment of this application, the terminal includes but is not limited to a mobile phone, a tablet computer, a notebook computer, a palmtop computer, an in-vehicle terminal, a wearable device, a pedometer, and the like.

It should be understood that, in this embodiment of this application, the radio frequency unit 31 may be configured to receive and send information or a signal in a call process. Specifically, after receiving downlink data from a base station, the radio frequency unit 31 sends the downlink data to the processor 310 for processing. In addition, the radio frequency unit 31 sends uplink data to the base station. Usually, the radio frequency unit 31 includes but is not limited to an antenna, at least one amplifier, a transceiver, a coupler, a low noise amplifier, a duplexer, and the like. In addition, the radio frequency unit 31 may further communicate with a network and another device by using a wireless communication system.

The memory 39 may be configured to store a software program and various pieces of data. The memory 39 may mainly include a program storage area and a data storage area. The program storage area may store an operating system, an application program required by at least one function (such as a sound play function or an image play function), and the like. The data storage area may store data (such as audio data or an address book) or the like created based on use of the mobile phone. In addition, the memory 39 may include a high-speed random access memory, and may further include a nonvolatile memory, for example, at least one magnetic disk storage device, a flash storage device, or another volatile solid-state storage device.

The processor 310 is a control center of the terminal, and connects all parts of the entire terminal by using various interfaces and lines. By running or executing a software program and/or a module stored in the memory 39 and invoking data stored in the memory 39, the processor 310 performs various functions of the terminal and data processing, to perform overall monitoring on the terminal. The processor 310 may include one or more processing units. Preferably, an application processor and a modem processor may be integrated into the processor 310. The application processor mainly processes an operating system, a user interface, an application program, and the like. The modem processor mainly processes wireless communications. It can be understood that, the modem processor may alternatively not be integrated into the processor 310.

The terminal 30 may further include the power supply 311 (such as a battery) that supplies power to each component. Preferably, the power supply 311 may be logically connected to the processor 310 by using a power management system, so as to implement functions such as charging, discharging, and power consumption management by using the power management system.

In addition, the terminal 30 includes some functional modules not shown, and details are not described herein.

An embodiment of this application further provides a readable storage medium, where the readable storage medium stores a program or an instruction, and when the program or the instruction is executed by a processor, processes of the above embodiments of the method for determining sidelink assistance information are implemented, and a same technical effect can be achieved. To avoid repetition, details are not described herein again.

The processor is a processor in the electronic device in the above embodiments. The readable storage medium includes a computer-readable storage medium such as a read-only memory (Read-Only Memory, ROM), a random access memory (Random Access Memory, RAM), a magnetic disk, an optical disc, or the like.

An embodiment of this application also provides a chip. The chip includes a processor and a communications interface, and the communications interface is coupled to the processor. The processor is configured to run a program or an instruction to implement processes of the above embodiments of the method for determining sidelink assistance information, and a same technical effect can be achieved. To avoid repetition, details are not described herein again.

It should be understood that the chip mentioned in this embodiment of this application may also be referred to as a system-level chip, a system chip, a chip system, or an on-chip system chip.

It can be understood that the embodiments described in the present disclosure may be implemented by hardware, software, firmware, middleware, microcode, or a combination thereof. For implementation with hardware, a module, unit, submodule, subunit, and the like may be implemented in one or more application specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general processors, controllers, micro-controllers, micro-processors, and other electronic units for implementing the functions of this application, or their combinations.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of more restrictions, an element defined by the statement "including a..." does not preclude the presence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the above implementations, a person skilled in the art may clearly understand that the method in the above embodiment may be implemented by software in addition to a necessary universal hardware platform or by hardware only. In most circumstances, the former is a preferred implementation. Based on such understanding, the technical solutions of this application essentially, or the part contributing to the prior art may be implemented in a form of a software product. The computer software product is stored in a storage medium (for example, a ROM/RAM, a magnetic disk, or a compact disc), and includes several instructions for instructing a terminal (which may be a mobile phone, a computer, a server, an air conditioner, a network device, or the like) to perform the method described in the embodiments of this application.

The embodiments of this application are described with reference to the accompanying drawings. However, this application is not limited to the foregoing specific implementations. The foregoing specific implementations are merely examples, but are not limiting. Under enlightenment of this application, a person of ordinary skill in the art may make many forms without departing from the objective and the scope of the claims of this application, and these forms all fall within the protection scope of this application.

## Claims

1. A method for determining sidelink assistance information, wherein the method is applied to a first terminal and comprises: determining the sidelink assistance information according to at least one piece of the following information, and sending the sidelink assistance information to a second terminal:
service transmission information of the second terminal;
resource notification information of the second terminal;
a constraint condition stipulated in a protocol, configured or pre-configured by a control node, or indicated by the second terminal; or interference intensity of a resource.

2. The method for determining sidelink assistance information according to claim 1, wherein a type of the service transmission information is determined by the second terminal, configured or pre-configured by the control node, or stipulated in a protocol.

3. The method for determining sidelink assistance information according to claim 1, wherein the service transmission information is for at least one of the following objects: a UE group, a LTE pair, a session, a bear, or a radio resource control connection; and
the constraint condition is for at least one of the following objects: a resource pool, a bandwidth part BWP, or a terminal.

4. The method for determining sidelink assistance information according to claim 1, wherein signaling carrying the service transmission information comprises at least one of the following:
radio resource control RRC signaling;
a medium access control control element MAC CE;
sidelink control information SCI; or
sidelink feedback control information SFCI.

5. The method for determining sidelink assistance information according to claim 1, wherein determining the sidelink assistance information according to the service transmission information of the second terminal comprises:
determining the sidelink assistance information in a case that specific service transmission information of the second terminal is received, wherein a service packet attribute of the specific service transmission information is configured or pre-configured by the control node or stipulated in a protocol.

6. The method for determining sidelink assistance information according to claim 1, wherein the resource notification information comprises information of M resources, and the information of M resources comprises at least one of the following: a time domain position of the resources, a frequency domain position of the resources, a period of the resources, a number of the resources, or whether the resources are used to enable retransmission mode or blind retransmission based on hybrid automatic repeat request HARQ feedback, wherein M is an integer greater than 1.

7. The method for determining sidelink assistance information according to claim 6, wherein the sidelink assistance information comprises at least one of the following:
N resources selected by the first terminal from the M resources, wherein N is a positive integer;
K resources selected by the first terminal from a resource pool, wherein an intersection set of the K resources and the M resources is N resources;
N resources selected by the first terminal from a resource pool; or
N resources with the least interference intensity among the M resources.

8. The method for determining sidelink assistance information according to claim 7, wherein M and/or N are determined by the first terminal, configured or pre-configured by the control node, or stipulated in a protocol.

9. The method for determining sidelink assistance information according to any one of claims 2 to 8, further comprising:
receiving trigger signaling from the second terminal, wherein the trigger signaling indicates that the first terminal feeds back the sidelink assistance information.

10. The method for determining sidelink assistance information according to claim 1, wherein the constraint condition comprises at least one of the following:
a resource in the sidelink assistance information is a resource in a specific resource pool;
limitation on a size of a resource set; or
limitation on a pattern of a resource set.

11. The method for determining sidelink assistance information according to claim 10, wherein the limitation on a size and/or pattern of a resource set comprises at least one of the following:
a maximum value of the number of time domain resources;
a minimum value of the number of time domain resources;
a maximum value of a ratio of a feedback time domain resource to all time domain resources in a specific time domain window;
a minimum value of a ratio of a feedback time domain resource to all time domain resources in a specific time domain window;
a maximum value of an interval between time domain resources;
a minimum value of an interval between time domain resources;
a maximum value of a length of continuous sidelink time domain resources;
a minimum value of a length of continuous sidelink time domain resources;
a maximum value of the number of frequency domain resources;
a minimum value of the number of frequency domain resources;
a maximum value of a ratio of the number of frequency domain resources to a resource pool bandwidth and/or a bandwidth part BWP; or
a minimum value of a ratio of the number of frequency domain resources to a resource pool bandwidth and/or a bandwidth part BWP;
a maximum value of a periodic resource period; or
a minimum value of a periodic resource period.

12. The method for determining sidelink assistance information according to claim 10, wherein the constraint condition is related to transmitted service information.

13. The method for determining sidelink assistance information according to claim 1, wherein determining the sidelink assistance information according to the interference intensity of a resource comprises at least one of the following:
the first terminal determines a reference resource window and measures a resource in the reference resource window, and the sidelink assistance information indicates z% of resources with a lowest measurement result;
the first terminal determines a reference resource window and measures a resource in the reference resource window, and the sidelink assistance information indicates k% of resources with a highest measurement result;
the first terminal determines a reference resource window and measures a resource in the reference resource window, and a resource indicated by the sidelink assistance information comprises z% of resources with a lowest measurement result; the first terminal determines a reference resource window and measures a resource in the reference resource window, and a resource indicated by the sidelink assistance information comprises k% of resources with a highest measurement result;
the first terminal determines a reference resource window and measures a resource in the reference resource window, and a resource indicated by the sidelink assistance information does not comprise z% of resources with a lowest measurement result;
the first terminal determines a reference resource window and measures a resource in the reference resource window, and a resource indicated by the sidelink assistance information does not comprise k% of resources with a highest measurement result;
the first terminal determines a reference resource window and measures a resource in the reference resource window, and the sidelink assistance information indicates a resource with a measurement result lower than a preset threshold;
the first terminal determines a reference resource window and measures a resource in the reference resource window, and the sidelink assistance information indicates a resource with a measurement result higher than a preset threshold;
the first terminal determines a reference resource window and measures a resource in the reference resource window, and a resource indicated by the sidelink assistance information comprises a resource with a measurement result lower than a preset threshold;
the first terminal determines a reference resource window and measures a resource in the reference resource window, and a resource indicated by the sidelink assistance information comprises a resource with a measurement result higher than a preset threshold;
the first terminal determines a reference resource window and measures a resource in the reference resource window, and a resource indicated by the sidelink assistance information does not comprise a resource with a measurement result lower than a preset threshold;
the first terminal determines a reference resource window and measures a resource in the reference resource window, and a resource indicated by the sidelink assistance information does not comprise a resource with a measurement result higher than a preset threshold;
the first terminal selects a virtual resource and determines a candidate resource set, and the sidelink assistance information indicates a resource in the candidate resource set;
the first terminal selects a virtual resource and determines a candidate resource set, and a resource indicated by the sidelink assistance information comprises a resource in the candidate resource set; or
the first terminal selects a virtual resource and determines a candidate resource set, and a resource indicated by the sidelink assistance information does not comprise a resource in the candidate resource set.

14. The method for determining sidelink assistance information according to claims 13, wherein
the reference resource window is determined by the first terminal, configured or pre-configured by the control node, or stipulated in a protocol; and/or
a granularity of a resource in the reference resource window is determined by the first terminal, configured or pre-configured by the control node, or stipulated in a protocol; and/or
the z% and k% are determined by the first terminal, configured or pre-configured by the control node, or stipulated in a protocol; and/or
the preset threshold is determined by the first terminal, configured or pre-configured by the control node, or stipulated in a protocol.

15. The method for determining sidelink assistance information according to claims 13, wherein
a granularity of a candidate resource in the candidate resource set is notified by the second terminal, determined by the first terminal, configured or pre-configured by the control node, or stipulated in a protocol; and/or
assumption of a transport block for transmitting the candidate resource is notified by the second terminal, determined by the first terminal, configured or pre-configured by the control node, or stipulated in a protocol; and/or
a resource selection window for selection of the virtual resource is determined by the first terminal, configured or pre-configured by the control node, or stipulated in a protocol; and/or
the candidate resource in the candidate resource set accounts for y% of candidate resources in the resource selection window, and y% is determined by the first terminal, configured or pre-configured by the control node, or stipulated in a protocol.

16. The method for determining sidelink assistance information according to claim 13, wherein the sidelink assistance information further comprises at least one of the following:
a maximum measurement value measured on a reported resource;
a minimum measurement value measured on a reported resource;
a measurement value of each resource in a reported resource; or
a threshold of a measurement value; and
the measurement value comprises at least one the following: a reference signal received power RSRP, a received signal strength indicator RS SI, reference signal received quality RSRQ, a signal to interference plus noise ratio SINR, or a signal to noise ratio SNR.

17. A method for determining sidelink assistance information, wherein the method is applied to a second terminal and comprises:
sending resource notification information and/or a constraint condition to a first terminal, so that the first terminal determines the sidelink assistance information.

18. The method for determining sidelink assistance information according to claim 17, wherein the resource notification information comprises information of M resources, and the information of M resources comprises at least one of the following: a time domain position of the resources, a frequency domain position of the resources, a period of the resources, a number of the resources, or whether the resources are used to enable retransmission mode or blind retransmission based on hybrid automatic repeat request HARQ feedback.

19. The method for determining sidelink assistance information according to claim 17, wherein the constraint condition is for at least one of the following objects: a resource pool, a bandwidth part BWP, or a terminal.

20. The method for determining sidelink assistance information according to claim 17, wherein the constraint condition comprises at least one of the following:
a resource in the sidelink assistance information is a resource in a specific resource pool;
limitation on a size of a resource set; or
limitation on a pattern of a resource set.

21. The method for determining sidelink assistance information according to claim 20, wherein the limitation on a size and/or pattern of a resource set comprises at least one of the following:
a maximum value of the number of time domain resources;
a minimum value of the number of time domain resources;
a maximum value of a ratio of a feedback time domain resource to all time domain resources in a specific time domain window;
a minimum value of a ratio of a feedback time domain resource to all time domain resources in a specific time domain window;
a maximum value of an interval between time domain resources;
a minimum value of an interval between time domain resources;
a maximum value of a length of continuous sidelink time domain resources;
a minimum value of a length of continuous sidelink time domain resources;
a maximum value of the number of frequency domain resources;
a minimum value of the number of frequency domain resources;
a maximum value of a ratio of the number of frequency domain resources to a resource pool bandwidth and/or a bandwidth part BWP; or
a minimum value of a ratio of the number of frequency domain resources to a resource pool bandwidth and/or a bandwidth part BWP;
a maximum value of a periodic resource period; or
a minimum value of a periodic resource period.

22. The method for determining sidelink assistance information according to claim 17, wherein the constraint condition is related to transmitted service information.

23. The method for determining sidelink assistance information according to claim 17, further comprising:
receiving the sidelink assistance information sent by the first terminal, and selecting a resource according to the sidelink assistance information and the constraint condition for resource selection.

24. The method for determining sidelink assistance information according to claim 23, wherein the constraint condition for resource selection is stipulated in a protocol, configured or pre-configured by a control node, or sent by the first terminal.

25. The method for determining sidelink assistance information according to claim 23, wherein the constraint condition for resource selection is related to transmitted service information.

26. The method for determining sidelink assistance information according to claim 23, wherein the constraint condition for resource selection comprises at least one of the following:
times for which the second terminal selects a resource according to the sidelink assistance information;
the number of a resource selected by the second terminal according to the sidelink assistance information;
a data volume of a resource selected by the second terminal according to the sidelink assistance information;
a transport block for a resource, selected by the second terminal according to the sidelink assistance information;
a modulation and coding scheme for a resource, selected by the second terminal according to the sidelink assistance information; or
a transmission power for a resource, selected by the second terminal according to the sidelink assistance information.

27. An apparatus for determining sidelink assistance information, wherein the apparatus is applied to a first terminal and comprises:
a determining module, configured to determine the sidelink assistance information according to at least one piece of the following information:
service transmission information of a second terminal;
resource notification information of a second terminal;
a constraint condition stipulated in a protocol, configured or pre-configured by a control node, or indicated by a second terminal; or
interference intensity of a resource; and
a first sending module, configured to send the sidelink assistance information to the second terminal.

28. The apparatus for determining sidelink assistance information according to claim 27, wherein the service transmission information is for at least one of the following objects: a UE group, a LTE pair, a session, a bear, or a wireless resource control connection; and
the constraint condition is for at least one of the following objects: a resource pool, a bandwidth part BWP, or a terminal.

29. The apparatus for determining sidelink assistance information according to claim 27, wherein the determining module is specifically configured to determine the sidelink assistance information when receiving specific service transmission information of the second terminal, wherein a service packet attribute of the specific service transmission information is configured or pre-configured by the control node or stipulated in a protocol.

30. The apparatus for determining sidelink assistance information according to claim 27, wherein the resource notification information comprises information of M resources, and the information of M resources comprises at least one of the following: a time domain position of the resources, a frequency domain position of the resources, a period of the resources, a number of the resources, or whether the resources are used to enable retransmission mode or blind retransmission based on hybrid automatic repeat request HARQ feedback, wherein M is an integer greater than 1.

31. The apparatus for determining sidelink assistance information according to claim 27, wherein the constraint condition comprises at least one of the following:
a resource in the sidelink assistance information is a resource in a specific resource pool;
limitation on a size of a resource set; or
limitation on a pattern of a resource set.

32. The apparatus for determining sidelink assistance information according to claim 27, wherein the determining module is specifically configured to perform any one of the following:
determining a reference resource window and measuring a resource in the reference resource window, wherein the sidelink assistance information indicates z% of resources with a lowest measurement result;
determining a reference resource window and measuring a resource in the reference resource window, wherein the sidelink assistance information indicates k% of resources with a highest measurement result;
determining a reference resource window and measuring a resource in the reference resource window, wherein a resource indicated by the sidelink assistance information comprises z% of resources with a lowest measurement result; the first terminal determines a reference resource window and measures a resource in the reference resource window, and a resource indicated by the sidelink assistance information comprises k% of resources with a highest measurement result;
determining a reference resource window and measuring a resource in the reference resource window, wherein a resource indicated by the sidelink assistance information does not comprise z% of resources with a lowest measurement result;
determining a reference resource window and measuring a resource in the reference resource window, wherein a resource indicated by the sidelink assistance information does not comprise k% of resources with a highest measurement result;
determining a reference resource window and measuring a resource in the reference resource window, wherein the sidelink assistance information indicates a resource with a measurement result lower than a preset threshold;
determining a reference resource window and measuring a resource in the reference resource window, wherein the sidelink assistance information indicates a resource with a measurement result higher than a preset threshold;
determining a reference resource window and measuring a resource in the reference resource window, wherein a resource indicated by the sidelink assistance information comprises a resource with a measurement result lower than a preset threshold;
determining a reference resource window and measuring a resource in the reference resource window, wherein a resource indicated by the sidelink assistance information comprises a resource with a measurement result higher than a preset threshold;
determining a reference resource window and measuring a resource in the reference resource window, wherein a resource indicated by the sidelink assistance information does not comprise a resource with a measurement result lower than a preset threshold;
determining a reference resource window and measuring a resource in the reference resource window, wherein a resource indicated by the sidelink assistance information does not comprise a resource with a measurement result higher than a preset threshold;
selecting a virtual resource and determining a candidate resource set, wherein the sidelink assistance information indicates a resource in the candidate resource set;
selecting a virtual resource and determining a candidate resource set, wherein a resource indicated by the sidelink assistance information comprises a resource in the candidate resource set; or
selecting a virtual resource and determining a candidate resource set, wherein a resource indicated by the sidelink assistance information does not comprise a resource in the candidate resource set.

33. An apparatus for determining sidelink assistance information, wherein the apparatus is applied to a second terminal and comprises:
a second sending module, configured to send resource notification information and/or a constraint condition to a first terminal, so that the first terminal determines the sidelink assistance information.

34. The apparatus for determining sidelink assistance information according to claim 33, wherein the resource notification information comprises information of M resources, and the information of M resources comprises at least one of the following: a time domain position of the resources, a frequency domain position of the resources, a period of the resources, a number of the resources, or whether the resources are used to enable retransmission mode or blind retransmission based on hybrid automatic repeat request HARQ feedback.

35. The apparatus for determining sidelink assistance information according to claim 33, wherein the constraint condition is for at least one of the following objects: a resource pool, a bandwidth part BWP, or a terminal.

36. The apparatus for determining sidelink assistance information according to claim 33, wherein the constraint condition comprises at least one of the following:
a resource in the sidelink assistance information is a resource in a specific resource pool;
limitation on a size of a resource set; or
limitation on a pattern of a resource set.

37. The apparatus for determining sidelink assistance information according to claim 33, wherein the constraint condition is related to transmitted service information.

38. The apparatus for determining sidelink assistance information according to claim 33, further comprising:
a receiving module, configured to receive the sidelink assistance information sent by the first terminal, and select a resource according to the sidelink assistance information and a constraint condition for resource selection.

39. An electronic device, comprising a processor, a memory, and a program or an instruction stored in the memory and capable of running on the processor, wherein when the program or the instruction is executed by the processor, the steps of the method according to any one of claims 1 to 26 are implemented.

40. A readable storage medium, wherein the readable storage medium stores a program or instruction, and when the program or the instruction is executed by a processor, the steps of the method according to any one of claims 1 to 26 are implemented.

41. A chip, comprising a processor and a communication interface, wherein the communication interface is coupled to the processor, and the processor is configured to run a program or an instruction to implement the method according to any one of claims 1 to 26.

42. A computer program product, wherein the program product is executed by at least one processor to implement the method according to any one of claims 1 to 26.

43. An electronic device, configured to implement the method according to any one of claims 1 to 26.
